Europäisches Patentamt

(19) European Patent Office

Office européen des brevets

(11) Veröffentlichungsnummer: **0 080 168**
**B1**

# EUROPÄISCHE PATENTSCHRIFT

(45) Veröffentlichungstag der Patentschrift:
21.08.85

(21) Anmeldenummer: 82110647.3

(22) Anmeldetag: 18.11.82

(51) Int. Cl.⁴: **C 02 F 1/68, B 01 J 4/02,**
**F 04 B 9/10**

(54) Mechanisch-hydraulische Dosiereinrichtung und Verfahren zum Betrieb.

(30) Priorität: 25.11.81 DE 3146616

(43) Veröffentlichungstag der Anmeldung:
01.06.83 Patentblatt 83/22

(45) Bekanntmachung des Hinweises auf die Patenterteilung:
21.08.85 Patentblatt 85/34

(84) Benannte Vertragsstaaten:
AT BE CH FR IT LI NL

(56) Entgegenhaltungen:
DE - A - 1 811 953
DE - A - 2 725 475
DE - C - 919 373

(73) Patentinhaber: **LANG APPARATEBAU GMBH,**
**Raiffeisenstrasse 7, D-8221 Siegsdorf Obb. (DE)**

(72) Erfinder: **Eichner, Walter, Haunertinger Strasse 1,**
**D-8227 Siegsdorf (DE)**

(74) Vertreter: **Bornemann, Dieter, Dipl.-Ing., c/o Henkel**
**Kommanditgesellschaft auf Aktien - Patentabteilung -**
**Postfach 1100 Henkelstrasse 67, D-4000 Düsseldorf (DE)**

**Beschreibung**

Die Erfindung betrifft eine mechanisch-hydraulische Dosiereinrichtung mit einer durch ein Arbeitsmittel betätigten Dosierpumpe zum Eindosieren von Chemikalien in eine Flüssigkeitsleitung, insbesondere Wasserleitung, wobei der Druckabfall auf einer Leitungsstrecke über umgesteuerte Wege abwechselnd auf die eine und die andere Seite des Arbeitsmittels zu schalten ist. Sie betrifft ferner ein Verfahren zum Betrieb der Einrichtung.

Bei einer in der DE-A-2 725 475 beschriebenen Dosiereinrichtung dieser Art wird ein einen zur Durchflußmenge und zum Dosiergegendruck proportionalen Differenzdruck zwischen zwei Punkten der mit dem Dosierchemikal zu beaufschlagenden Flüssigkeitsleitung einstellender Differenzdruckgeber vorgesehen. Der Dosiergegendruck ist dabei der Druck, gegen den einzudosieren ist. Die Hoch- und Niedrigdruckseite des Differenzdruckgebers werden auf eine Servosteuerung zum Betätigen der Dosierpumpe geschaltet. Mit Hilfe der bekannten Vorrichtung kann ohne Verwendung von Fremdenergie bzw. Innendruck der geförderten und mit dem Dosiermittel zu versehenden Flüssigkeit eindosiert werden. Zugleich ist die bekannte Einrichtung in der Lage, das gesamte durch die Flüssigkeitsleitung fließende Medium proportional zu erfassen und dementsprechend die Menge des dosierten Chemikals einzustellen.

Aus DE-C-919 373 ist weiterhin eine mechanisch-hydraulische Dosiereinrichtung bekannt. Diese Vorrichtung hat eine durch ein Kraftorgan betätigte Dosierpumpe, die Chemikalien in eine Hauptwasserleitung dosiert. Das Kraftorgan besteht aus einer Membrankammer und einer Membran. Die Membran wird durch das abwechselnd auf die eine und andere Seite der Membran eingespeiste Druckwasser hin- und herbewegt. Das Druckwasser wird durch Leitungen von der Hauptwasserleitung abgezweigt und mittels eines rotierenden Steuerkolbens zu der einen oder anderen Seite der Membran gefördert. Zur gleichen Zeit entweicht das Wasser aus dem nicht in Verbindung mit der Hauptwasserleitung stehenden Teil der Membrankammer durch einen Auslauf. Die Strömung des Wassers in der Hauptwasserleitung versetzt dabei den Steuerkolben mittels eines Flügelradmessers in Drehung.

Aus DE-A-1 811 953 ist schließlich eine Dosiereinrichtung bekannt, wobei in beiden Anlässen eines Steuerventils eine verstellbare Drossel vor dem freien Auslauf angeordnet ist.

Der Erfindung liegt die Aufgabe zugrunde, die bekannte Vorrichtung so weiter auszugestalten, daß bei geringen Werten von Mediumdurchfluß und bei geringem Vordruck eine einwandfreie Dosierung zu erzielen, d. h. Proportionalität der Menge des eindosierten Chemikals zur erfaßten Flüssigkeitsmenge zu garantieren ist. Die erfindungsgemäße Lösung besteht in eine mechanisch-hydraulische Dosiereinrichtung mit einer Dosierpumpe (18) zum Eindosieren von Chemikalien (24) in eine Flüssigkeitsleitung (3), wobei der Druckabfall auf einer Leitungsstrecke über umgesteuerte Wege abwechselnd auf die eine und andere Seite des Arbeitsmittels (16) der Pumpe (18) zu schalten ist, wobei die jeweils eine Seite des Arbeitsmittels (16) auf den Leitungsdruck (10) und die jeweils andere Seite des Arbeitsmittels (16) auf einen freien Auslauf (21) zu schalten sind und wobei bei als Antrieb zum abwechselnden Umsteuern des Leitungsdrucks (10) auf die eine oder andere Seite des Arbeitsmittels (16) in die Leitung gesetztem Wassermotor (4) die jeweilige Hochdruckseite des Arbeitsmittels (16) mit dem im Verlauf der Leitung (3) vor dem Wassermotor anstehenden Leitungsdruck zu beaufschlagen ist, gekennzeichnet durch systemunabhängig konstant eingestellten Dosiergegendruck an der Dosierstelle (32) und dadurch, daß die Leitung (30) zwischen Dosierpumpe (18) und Dosierstelle (32) der mit dem Dosierchemikal zu beaufschlagenden Leitung (3) ein durch den Leitungsdruck bzw. Systemdruck gesteuertes, einstellbares Dosierventil (31) enthält.

Durch die Erfindung wird also bei geringsten Durchflußmengen und Leitungsdrücken der Wirkungsgrad der Anlage dadurch erhöht, daß das für den Arbeitskolben notwendige Energiepotential aus der Differenz von Leitungsdruck und freiem Auslauf herangezogen wird. Das bedeutet, daß der Druckverlust der Einrichtung geringer ist und demgemäß der nutzbare Druckabfall höher gehalten werden kann als bei der bekannten Dosiervorrichtung, weil das Arbeitsmedium nicht mehr aus dem Arbeitszylinder in das Leitungssystem zurückgeführt wird, sondern in einen freien Auslauf abfließt.

Die minimal notwendige Antriebsenergie für die Dosierpumpe kann durch Hilfseinrichtungen, z. B. durch manuell oder automatisch einzustellende Drosseln an der in einen freien Auslauf mündenden Ausstoßseite des Arbeitskolbens eingestellt werden. Hierzu kann der Drossel eine Justierschraube zugeordnet werden. Insbesondere bei besonders geringem Mediumdurchfluß und Vordruck ist es gemäß weiterer Erfindung vorteilhaft, wenn bei als Antrieb zum abwechselnden Umsteuern des Leitungsdrucks auf die eine oder andere Seite des Arbeitskolbens in die Leitung gesetztem Wassermotor die jeweilige Hochdruckseite des Arbeitskolbens mit dem im Verlauf der Leitung vor dem Wassermotor anstehenden Leitungsdruck zu beaufschlagen ist. Auf diese Weise wird der am Wassermotor ohnehin auftretende Druckabfall mit in das nutzbare Antriebspotential des Arbeitskolbens einbezogen.

Höchste Dosiergenauigkeit kann demgemäß durch systemunabhängigen konstant eingestellten Dosiergegendruck erreicht werden. Vorzugsweise wird hierzu in die Leitung zwischen Dosierpumpe und Dosierstelle in der mit dem Dosierchemikal zu beaufschlagenden Leitung ein durch den Leitungsdruck bzw. Systemdruck gesteuertes, einstellbares Dosierventil eingeschaltet. Restliche im System verbleibende Dosier-Ungenauigkeiten, verursacht durch Flexibilität der eingesetzten Werkstoffe, können dadurch vermindert werden.

Schließlich bezieht sich die Erfindung auch auf ein Verfahren zum Betrieb der mechanischhydraulischen Dosiereinrichtung eingangs genannter Art und besteht dabei darin, daß man das Arbeitsmittel mit dem Differenzdruck von Leitungsdruck und freien Auslauf beaufschlagt. Der bei der aus der DE-A-2 725 475 bekannten Dosiereinrichtung in Kauf zu nehmende Druckabfall an der Stelle, an der das zum Antrieb des Arbeitskolbens benutzte Medium in die Leitung zurückgeführt wurde, ist erfindungsgemäß also auf praktisch null herabzusetzen.

Anhand der schematischen Darstellung eines Ausführungsbeispiels werden weitere Einzelheiten der Erfindung erläutert.

In dem Funktionsschema gemäß Zeichnung wird angenommen, daß Wasser 1 in Pfeilrichtung 2 aus der Wasserleitung 3 in den Wassermotor 4 fließt. Die dadurch angetriebene Ausgangswelle 5 des Wassermotors 4 soll dann ihrerseits mit Hilfe eines auf sie aufgesetzten Exzenters 6 einen Vier/Zwei-Wege-Schieber 7 über dessen Betätigungsstange 8 in Pfeilrichtung 9 hin- und herbewegen. Die Wasserleitung 3 soll einen der Deutlichkeit halber als Hochdruckleitung 10 bezeichneten Abzweig besitzen, durch den das Antriebsmedium des nachgeschalteten Arbeitszylinders 11 zum Schieber 7 zu leiten ist. Letzterer mag zwei abwechselnd zu beaufschlagende Ausgänge besitzen, nämlich eine zum einen Zylinderraum 12 führende Leitung 13 und eine zum anderen Zylinderraum 14 führende Leitung 15, wobei zwischen den beiden Zylinderräumen bzw. Zylinderteilen 12 und 14 der Arbeitskolben 16 vorzusehen ist. Dieser wird über eine Kolbenstange 17 mit dem in der Dosierpumpe 18 geführten Dosierkolben 19 fest gekoppelt. Der Schieber 7 soll außerdem einen dritten Ausgang mit einer Abflußleitung 20 zu einem freien Auslauf 21 besitzen.

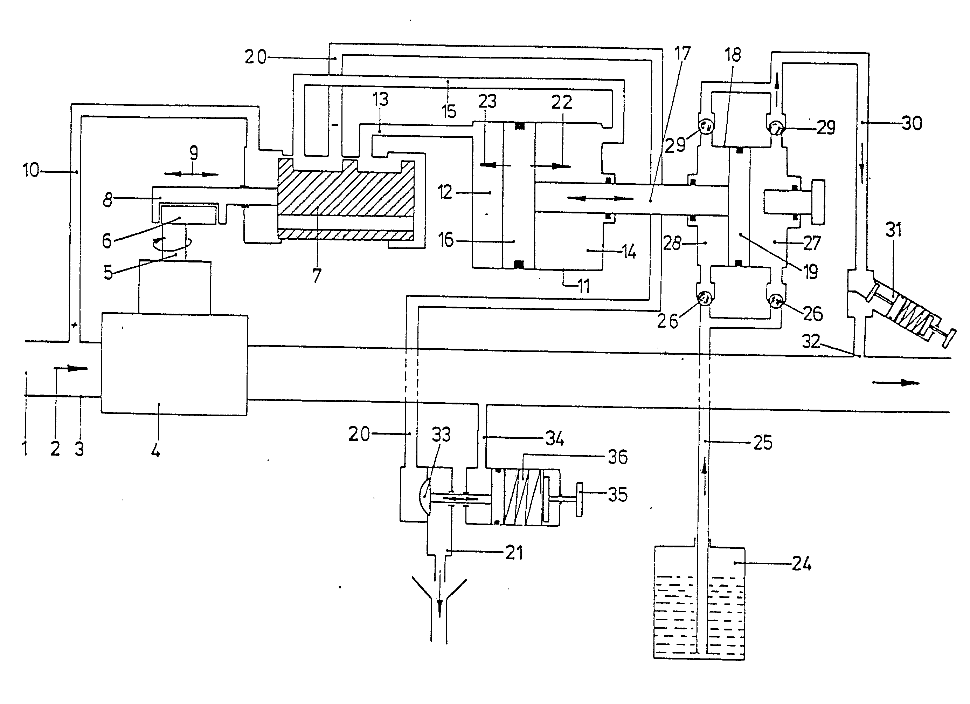

Durch den Differenzdruck zwischen der Hochdruckleitung 10 und dem freien Auslauf 21 wird bewirkt, daß über den Vier/Zwei-Wege-Schieber 7 der Arbeitskolben 16 über die Leitung 13 und den Zylinderraum 12 beaufschlagt und in Pfeilrichtung 22 nach rechts bzw. beim Umschalten des Schiebers 7 über die Leitung 15 und den Zylinderraum 14 in Pfeilrichtung 23 nach links bewegt wird. In der in der Zeichnung dargestellten Stellung bewegt sich der Arbeitskolben 16 gerade nach rechts, da im Kolbenraum 12 der höhere Druck der Hochdruckleitung 10 ansteht, während im Zylinderraum 14 der Druck des Auslaufs also praktisch der Druck null herrscht.

Zugleich mit dem Arbeitskolben 16 wird wegen der festen Kopplung über die Kolbenstange 17 der Dosierkolben 19 hin- und herbewegt. Erfolgt die Bewegung in Pfeilrichtung 22 nach rechts, so wird das Dosierchemikal 24 über die Saugleitung 25 und Saugventil 26 in den Dosierzylinderraum 28 (links vom Dosierkolben 19) eingesaugt. Gleichzeitig wird durch den Dosierkolben 19 das Dosierchemikal im rechten Dosierzylinderraum 27 ausgestoßen bzw. verdrängt und über das Druckventil 29 sowie eine Dosierleitung 30 und gegebenenfalls ein Dosierventil 31 der Dosierstelle 32 in das in der Leitung 3 geführte Wasser 1 eindosiert. Mit Hilfe eines systemdruckgesteuerten und einstellbaren Dosierventils 31 kann höchste Dosiergenauigkeit mit konstantem, systemunabhängigem Dosiergegendruck erreicht werden.

Die minimal notwendige Antriebsenergie für die Dosierpumpe 18 läßt sich durch entsprechende Hilfseinrichtungen einstellen. Zum Beispiel kann hierzu eine manuell oder automatisch einzustellende Drossel 33 im freien Auslauf 21 verwendet werden. In der Zeichnung wird eine automatisch arbeitende Drossel 33 im Auslauf 21 vorgesehen. Die Drossel 33 wird dabei über eine Systemdruckleitung 34 gesteuert, in der der Systemdruck so auf die mit Hilfe einer Justierschraube 35 einzustellende vorgespannte Feder 36 der Drossel 33 einwirkt, daß bei erhöhtem Systemdruck in der Leitung 3 der Ausgang der Leitung 20 weniger als bei geringerem Systemdruck gedrosselt ist.

Bezugszeichenliste

1 = Wasser
2 = Pfeilrichtung
3 = Wasserleitung
4 = Wassermotor
5 = Ausgangswelle (4)
6 = Exzenter (5)
7 = Schieber
8 = Betätigungsstange (7)
9 = Pfeilrichtung
10 = Hochdruckleitung
11 = Arbeitszylinder
12 = Zylinderraum (11)
13 = Leitung 7/12
14 = Zylinderraum (11)
15 = Leitung 7/14
16 = Arbeitskolben
17 = Kolbenstange
18 = Dosierpumpe
19 = Dosierkolben
20 = Abflußleitung
21 = freier Auslauf
22 = Pfeilrichtung
23 = Pfeilrichtung
24 = Dosierchemikal
25 = Saugleitung
26 = Saugventil
27 = Dosierzylinderraum (rechts)
28 = Dosierzylinderraum (links)
29 = Druckventil
30 = Dosierleitung
31 = Dosierventil
32 = Dosierschelle
33 = Drossel

34 = Systemdruckleitung
35 = Justierschraube
36 = Feder

## Patentansprüche

1. Mechanisch-hydraulische Dosiereinrichtung mit einer Dosierpumpe (18) zum Eindosieren von Chemikalien (24) in eine Flüssigkeitsleitung (3), wobei der Druckabfall auf einer Leitungsstrecke über umgesteuerte Wege abwechselnd auf die eine und andere Seite des Arbeitsmittels (16) der Pumpe (18) zu schalten ist, wobei die jeweils eine Seite des Arbeitsmittels (16) auf den Leitungs druck (10) und die jeweils andere Seite des Arbeitsmittels (16) auf einen freien Auslauf (21) zu schalten sind und wobei bei als Antrieb zum abwechselnden Umsteuern des Leitungsdrucks (10) auf die eine oder andere Seite des Arbeitsmittels (16) in die Leitung gesetztem Wassermotor (4) die jeweilige Hochdruckseite des Arbeitsmittels (16) mit dem im Verlauf der Leitung (3) vor dem Wassermotor anstehenden Leitungsdruck zu beaufschlagen ist, gekennzeichnet durch systemunabhängig konstant eingestellten Dosiergegendruck an der Dosierstelle (32) und dadurch, daß die Leitung (30) zwischen Dosierpumpe (18) und Dosierstelle (32) der mit dem Dosierchemikal zu beaufschlagenden Leitung (3) ein durch den Leitungsdruck bzw. Systemdruck gesteuertes, einstellbares Dosierventil (31) enthält.

2. Dosiereinrichtung nach Anspruch 1, dadurch gekennzeichnet, daß das Arbeitsmittel (16) der Pumpe (18) als Arbeitskolben ausgebildet ist.

3. Verfahren zum Betrieb der Einrichtung nach Anspruch 1 oder 2, dadurch gekennzeichnet, daß man das Arbeitsmittel (16) mit dem Differenzdruck von Leitungsdruck und freiem Auslauf beaufschlagt.

## Claims

1. Mechanical-hydraulic metering equipment with a metering pump (18) for the metering of chemicals (24) into a liquid duct (3), wherein the pressure gradient on a duct length is to be switched by way of reversible pathsonto the one and the other side of the operating means (16) of the pump (18), wherein each time one side of the operating means (16) is to be switched to the duct pressure (10) and the respective other side of the operating means (16) is to be switched to a free outlet (21) and wherein — in the ease of a water motor (4) placed in the duct as drive for the alternating reversal of the duct pressure (10) onto the one or the other side of the operating means (16) — the respective high-pressure side of the operating means (16) is to be loaded by the duct pressure arising in front of the water motor in the run of the duct (3), characterised by metering counterpressure, set to be constant and independent of system, at the metering place (32) and thereby, that the duct (30) between metering pump (18) and metering place (32) of the duct (3) to be loaded by the metered chemical contains a settable metering valve (31) controlled by the duct pressure or the system pressure.

2. Metering equipment according to claim 1, characterised thereby, that the operating means (16) of the pump (18) is constructed as operating piston.

3. Method for the operation of the equipment according to claim 1 or 2, characterised thereby, that one loads the operating means (16) with the difference pressure of duct pressure and free outlet.

## Revendications

1. Appareil de dosage mécanique-hydraulique comportant une pompe doseuse (18) pour l'introduction dosée d'agents chimiques (24) dans une conduite à liquide (3), la chute de pression devant être branchée alternativement, sur un parcours de conduite, grâce à des voies commutées, sur l'un et l'autre côté du moyen de travail (16) de la pompe (18), le premier côté respectif du moyen de travail (16) devant être branché chaque fois sur la pression de la conduite (10) et l'autre côté respectif du moyen de travail (16) sur une sortie libre (21) et, dans le cas d'un moteur à eau (4) placé dans la conduite pour commuter alternativement la pression de la conduite (10) sur l'un ou l'autre côté du moyen de travail, le côté momentanément à haute pression du moyen de travail (16) devant être soumis à la pression de conduite qui règne, dans le parcours de la conduite (3), avant le moteur à eau, appareil caractérisé par le fait qu'il existe une contre-pression de dosage à l'endroit de dosage (32), laquelle est réglée de façon constante indépendemment du système, et par le fait que la conduite (30), située entre la pompe doseuse (18) et l'endroit de dosage (32) de la conduite (3) à alimenter en agent chimique de dosage, contient une valve doseuse réglable (31) commandée par la pression de la conduite ou la pression du système.

2. Appareil de dosage selon la revendication 1, caractérisé par le fait que la moyen de travail (16) de la pompe (18) est conçu sous forme d'un piston de travail.

3. Procédé pour le fonctionnement de l'appareil selon l'une ou l'autre des revendications 1 ou 2, caractérisé par le fait que l'on applique au moyen de travail (16) la pression différentielle de la pression de conduite et de la sortie libre.